# EUROPEAN PATENT APPLICATION

(11) **EP 4 832 277 A1**
(43) Date of publication of application: **28.10.2026**
(21) Application number: 26171841.5
(22) Date of filing: 13.04.2026
(51) Int. Cl.: H02G 5/04, H02G 5/08

(54) **SELF-EXTINGUISHING ARC FLASH BUSWAY**

(30) Priority: 23.04.2025 US 202519186760
(71) Applicant: Schneider Electric USA, Inc., Boston, MA 02108 (US)
(72) Inventor: CARNE, Clinton Neal, Boston, 02108 (US); WOODSON, Cameron Lee, Boston, 02108 (US); GONNET, Jean-Paul, Boston, 02108 (US)
(74) Representative: Openshaw & Co.

(57) **Abstract**

A busway and plug-in unit connection assembly includes a busway (20) including a support (24), a busbar (36, 38) coupled to the support (24), and a sleeve (60, 80) coupled to the support (24). The sleeve (60, 80) surrounds portions of the busbar (36, 38). The connection assembly includes a plug-in unit (30) including a housing (32) configured to be secured to the busway (20), and an electrical coupling assembly coupled to the housing (32) and configured to move between an uncoupled position in which the plug-in unit (30) is uncoupled to the busway (20) and a coupled position in which the plug-in unit (30) is electrically coupled to the busway (20). The electrical coupling assembly has a finger (48, 50) configured to engage the busbar (36, 38) when in the coupled position with the sleeve (60, 80) extending beyond an interface of the finger (48, 50) and the busbar (36, 38).

## Description

### BACKGROUND OF DISCLOSURE

### 1. Field of Disclosure

This disclosure is directed to busways, and more particularly to a connection assembly configured to install, remove and replace a plug-in unit to and from the busway without having to power down ("off") the busway while addressing arc flash concerns, and to a method of installing, removing and replacing the plug-in unit on the busway.

### 2. Discussion of Related Art

Busway electrical distribution systems are well known in the art of electrical distribution. Busway systems may include a number of factory assembled sections, each including a number of individually insulated generally flat electrical conductors or busbars stacked one upon another and enclosed within a housing that provides protection and support for the busbars. For example, typical busway systems have ten-foot (or four-foot) sections of flat, stacked, electrical conductors for transporting electrical energy from a point A to a point B, while distributing the electrical energy to various electrical loads. Busway construction is modular, and, in many ways, is superior to cable and conduit systems from an installation standpoint.

For distribution of the electrical energy, the busway sections include one or more plug-in outlets having a plurality of conductive contact points on the internal busbars. In general, the plug-in outlets include openings that are provided through the housing of the busway system at each of a plurality of power tap-off sections to expose conductive material of the busbars for connection with an appropriate connecting jaw. A plug-in unit, which is used to tap off power from the busway, is attached to the plug-in opening by mounting a plurality of jaws to the respective busbars.

When adding, removing or replacing the plug-in unit to and from the busway, it is advised or sometimes required to power down the busway prior to performing one of these functions. As busways are used increasingly within data centers, the requirement to first power down the busway before making any changes to the plug-in unit population is somewhat onerous, since powering down the busway means a portion of the data center is down for operation. The temptation may exist to ignore this requirement and perform "live work" by "hot swapping" the plug-in unit.

One approach used to prevent the temptation of not powering down the busway is to place numerous warning labels on the equipment and within the installation manual associated with the plug-in unit. Such warnings encourage the person installing the plug-in unit to first power down the busway before making any changes. A disadvantage associated with this approach is that "hot swapping" still occurs despite the warnings due to the installer's desire to maintain a high level of uptime in the data center.

Another approach is for the installer or operator to have two separate feeds, and to employ one feed when powering down the other feed. A disadvantage associated with this approach is that there is no redundancy when one feed is powered down.

### SUMMARY OF DISCLOSURE

One aspect of the present disclosure is directed to a busway and plug-in unit connection assembly. In one embodiment, the busway and plug-in unit connection assembly comprises a busway including a support, at least one busbar coupled to the support, and at least one sleeve coupled to the support. The at least one sleeve surrounds portions of the at least one busbar. The connection assembly further comprises a plug-in unit including a housing configured to be secured to the busway, and an electrical coupling assembly coupled to the housing and configured to move between an uncoupled position in which the plug-in unit is uncoupled to the busway and a coupled position in which the plug-in unit is electrically coupled to the busway. The electrical coupling assembly has at least one finger configured to engage the at least one busbar when in the coupled position with the at least one sleeve extending beyond an interface of the at least one finger and the at least one busbar.

Embodiments of the connection assembly further may include configuring the at least one sleeve to have a top wall portion, a first side wall portion, and a second side wall portion. The top wall portion may be configured to cover a portion of a top of the at least one busbar, the first side wall portion may be configured to cover a portion of a first side of the at least one busbar, and the second side wall portion may be configured to cover a portion of a second side of the at least one busbar. The first side wall portion and the second side wall portion of the at least one sleeve extend beyond the at least one busbar and include a reduced width portion at distal ends of the first side wall portion and the second side wall portion beyond an edge of the at least one busbar. The reduced width portion may create a pinch point in which the first side wall portion engages the second side wall portion. The plug-in unit further may include at least one barrier structure coupled to the housing on sides of the at least one finger. The at least one barrier structure may include a first barrier extending from the housing on one side of the at least one finger and a second barrier extending from the housing on an opposite side of the at least one finger. The first barrier and the second barrier of the at least one barrier structure may include an insulator. The first side wall portion may be configured to engage the first barrier and the second side wall portion may be configured to engage the second barrier. The at least one busbar of the busway may include a first busbar and a second busbar each coupled to the support of the busway. The least one finger of the electrical coupling assembly of the plug-in unit may include a first finger and a second finger each coupled to the housing of the plug-in unit. The at least one sleeve may include a first sleeve surrounding portions of the first busbar and extending beyond the first busbar and a second sleeve surrounding portions of the second busbar and extending beyond the second busbar. Each of the first sleeve and the second sleeve may include a top wall portion, a first side wall portion, and a second side wall portion. The top wall portion of the first sleeve may be configured to cover a portion of a top of the first busbar, the first side wall portion of the first sleeve may be configured to cover a portion of a first side of the first busbar, and the second side wall portion of the first sleeve may be configured to cover a portion of a second side of the first busbar. The top wall portion of the second sleeve may be configured to cover a portion of a top of the second busbar, the first side wall portion of the second sleeve may be configured to cover a portion of a first side of the second busbar, and the second side wall portion of the second sleeve may be configured to cover a portion of a second side of the second busbar. The first side wall portion and the second side wall portion of each of the first sleeve and the second sleeve may extend beyond the at least one busbar and may include a reduced width portion at distal ends of the first side wall portion and the second side wall portion beyond an edge of its respective busbar. The electrical coupling assembly of the plug-in unit further may include a first barrier structure coupled to the housing on sides of the first finger and a second barrier structure coupled to the housing on sides of the second finger. Each of the first barrier structure and the second barrier structure may include a first barrier extending from the housing on one side of its respective finger and a second barrier extending from the housing on an opposite side of its respective finger. The plug-in unit further may include at least one insulated flange on a side of the housing and may extend over a portion of the busway. The at least one sleeve may include an insulating material. The busway further may include a stopper element on the busbar and configured to block movement of an arc of an arc flash.

Another aspect of the present disclosure is directed to a busway and plug-in unit connection assembly. In one embodiment, the connection assembly comprises a busway including a support, at least one busbar coupled to the support, and at least one sleeve coupled to the support. The at least one sleeve surrounds portions of the at least one busbar. The connection assembly further comprises a plug-in unit including a housing configured to be secured to the busway, and an electrical coupling assembly coupled to the housing and configured to move between an uncoupled position in which the plug-in unit is uncoupled to the busway and a coupled position in which the plug-in unit is electrically coupled to the busway. The electrical coupling assembly has at least one finger configured to engage the at least one busbar when in the coupled position. The at least one sleeve includes a reduced width portion to create a pinch point.

Yet another aspect of the present disclosure is directed to a connection assembly comprising at least one sleeve surrounding portions of at least one conductor. At least one finger of one of an electrical coupling assembly or the at least one conductor is configured to achieve a coupled position with the at least one sleeve extending beyond an interface of the at least one finger and the at least one conductor.

Embodiments of the connection assembly further may include a stopper element configured to block movement of an arc of an arc flash. The at least one sleeve may include a first side wall portion configured to cover a portion of a first side of the at least one conductor and a second side wall portion configured to cover a portion of a second side of the at least one conductor. The first side wall portion and the second side wall portion of the at least one sleeve may extend beyond an edge of the at least one conductor. The connection assembly further may include at least one barrier structure on sides of the at least one finger. The at least one barrier structure may include a first barrier extending from the housing on one side of the at least one finger and a second barrier extending from the housing on an opposite side of the at least one finger.

Another aspect of the present disclosure is directed to a connection assembly comprising at least one sleeve surrounding portions of at least one conductor. At least one finger of one of an electrical coupling assembly or the at least one conductor is configured to achieve a coupled position. The at least one sleeve includes a reduced width portion to create a pinch point.

Another aspect of the present disclosure is directed to a connection assembly comprising at least one sleeve surrounding portions of at least one conductor. At least one finger of one of an electrical coupling assembly or the at least one conductor is configured to achieve a coupled position. The connection assembly further comprises a stopper element configured to block movement of an arc of an arc flash.

### BRIEF DESCRIPTION OF DRAWINGS

The accompanying drawings are not intended to be drawn to scale. In the drawings, each identical or nearly identical component that is illustrated in various figures is represented by a like numeral. For purposes of clarity, not every component may be labeled in every drawing. In the drawings:
FIG. 1 is a perspective view of a busway track system used in a portion of a data center;
FIG. 2 is an enlarged cross-sectional view of a portion of the busway track system showing a connector used to connect two sections of a busway track;
FIG. 3 is a perspective view of a plug-in unit configured to be releasably secured to the busway track;
FIG. 4 is a perspective view of the plug-in unit secured to the busway track;
FIG. 5 is a cross-sectional view of the plug-in unit partially installed on the busway track;
FIG. 6 is a cross-sectional perspective view of the plug-in unit partially installed on the busway track;
FIG. 7 is a cross-sectional view of the plug-in unit prior to being fully secured to the busway track;
FIG. 8 is a cross-sectional view of the plug-in unit shown in FIG. 7 fully secured to the busway track;
FIG. 9 is a perspective view of a protective sleeve of the busway track;
FIG. 10 is a cross-sectional view of the protective sleeve shown in FIG. 9;
FIG. 11 is a cross-sectional view of a protective sleeve of another embodiment that is similar to the sleeve shown in FIGS. 9 and 10;
FIG. 12 is a top perspective view of an interface of the plug-in unit;
FIG. 13 is a bottom perspective view of a portion of the busway track showing busbars of the busway track;
FIG. 14 is a perspective view of an arc stopper element of the busway track;
FIG. 15 is a cross-sectional view of the plug-in unit of another embodiment of the present disclosure prior to being fully secured to the busway track;
FIG. 16 is a cross-sectional view of the plug-in unit shown in FIG. 15 fully secured to the busway track;
FIG. 16A is a cross-sectional view of a protective sleeve of another embodiment of the present disclosure shown in FIGS. 15 and 16;
FIG. 17 is a perspective view of a protective sleeve of another embodiment of the present disclosure;
FIG. 18 is a cross-sectional view of the protective sleeve shown in FIG. 17;
FIG. 19 is a perspective view of a protective sleeve of another embodiment of the present disclosure;
FIG. 20 is a cross-sectional view of the protective sleeve shown in FIG. 19;
FIG. 21 is a cross-sectional view of a plug-in unit and a busway track of another embodiment of the present disclosure;
FIG. 22 is a perspective cross-sectional view of a busbar and a sleeve of the busway track shown in FIG. 21;
FIG. 23 is a perspective view of the busbar shown in FIG. 22, the busbar having a plurality of fingers; and
FIG. 24 is a cross-sectional view of the plug-in unit shown in FIG. 21.

### DETAILED DESCRIPTION

This disclosure is not limited in its application to the details of construction and the arrangement of components set forth in the following description or illustrated in the drawings. The principles set forth in this disclosure are capable of being provided in other embodiments and of being practiced or of being carried out in various ways. Also, the phraseology and terminology used herein is for the purpose of description and should not be regarded as limiting. The use of "including," "comprising," "having," "containing," "involving," and variations thereof herein, is meant to encompass the items listed thereafter and equivalents thereof as well as additional items.

Busways may be used to provide power to electrical equipment within a data center. Busways are used to power many electrical power distribution devices, such as plug-in units, power modules, switching apparatus, distribution apparatus, and batteries. It is advised or sometimes required to power down the busway prior to adding, removing or replacing a plug-in unit to and from the busway. Existing busways are sold primarily into factory or warehouse locations where they are less critical to power down the busway when changing the population of the plug-in units. In this environment, there is little impetus to develop a mechanism that enables plug-in units to be mechanically and electrically secured to the busway in a hot swappable manner. However, the electronic equipment housed within the data center oftentimes may perform critical tasks. In such instances, it is desirable to avoid powering down the busways.

During such hot swap replacements, arc flash can occur. Specifically, energized-swapping activities can pose electrical hazards, such as shock and arc flash, to operators performing such hot swap replacements. A shock hazard may occur when the operator approaches energized electric conductors or circuit parts. The operator may inadvertently touch the part, i.e., due to disturbances, stumbling, or when in close proximity to energized parts. An arc flash may result when a fault occurs between two conductors at potential relative to each other. This can be phase to phase, or phase to ground. Sources of an arc flash can be foreign elements, such as tools or dust/debris, defect or worn-down insulation material, poor design, poor installation, to name a few. Arc flash can be measured based on incident energy released through the air in the form of heat, sound, light, and explosive pressure, all of which can cause harm. Some specific injuries can include burns, blindness, electric shock, hearing loss, and fractures.

The busway and the plug-in unit of embodiments of the present disclosure enables the operator of the data center to incorporate the plug-in units on the busways of the data center to allow for adding or replacing plug-in units when the busway is powered on and for mitigating the effects of arc flash when they occur. Specifically, the busway and the plug-in unit embody a connection assembly that are configured to direct arc flash away from an operator during installation, removal or replacement of the plug-in unit.

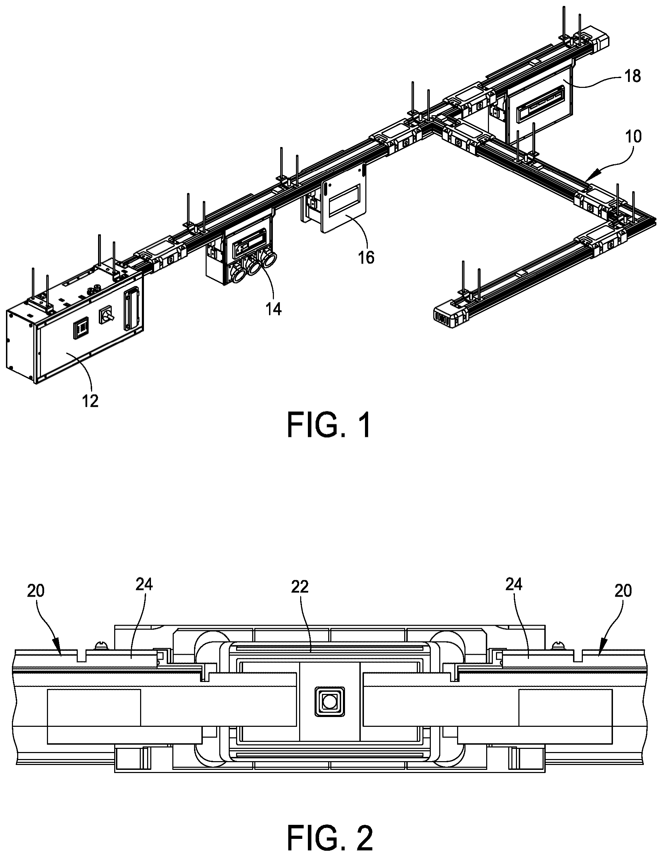

Referring to the drawings, and more particularly to FIG. 1, aspects of the present disclosure are directed to a busway track system, which is generally indicated at 10. As shown, the busway track system 10 is positioned within a portion of a data center including electrical equipment, indicated at 12, 14, 16, 18. The busway track system 10 provides sections of busway tracks that are configured to carry power and to provide easy access to such power from the equipment 12, 14, 16, 18. The busway tracks can be straight, curved or otherwise configured to achieve a desired design. In one embodiment, the busway tracks are elevated within the data center to service the equipment 12, 14, 16, 18. As will be described below, plug-in units are provided to power equipment below the busway track system. The busway track system 10 offers flexibility and scalability when designing data centers.

Referring to FIG. 2, the busway track system 10 includes sections of busway tracks, each generally indicated at 20. As shown, the busway tracks 20 are secured to one another by a connector 22. Each busway track 20 is configured to receive a plug-in unit to provide electrical power to electrical equipment, including electrical equipment 12, 14, 16, 18. As shown, each busway track 20 includes a housing or support 24 which is configured to support multiple busbars. As will be described in greater detail below, in one embodiment, each busway track 20 includes five busbars, one ground busbar and four live busbars configured to conduct current through the busway track system 10. The busway track 20 may be configured to include any number of busbars to provide suitable power to the electrical equipment.

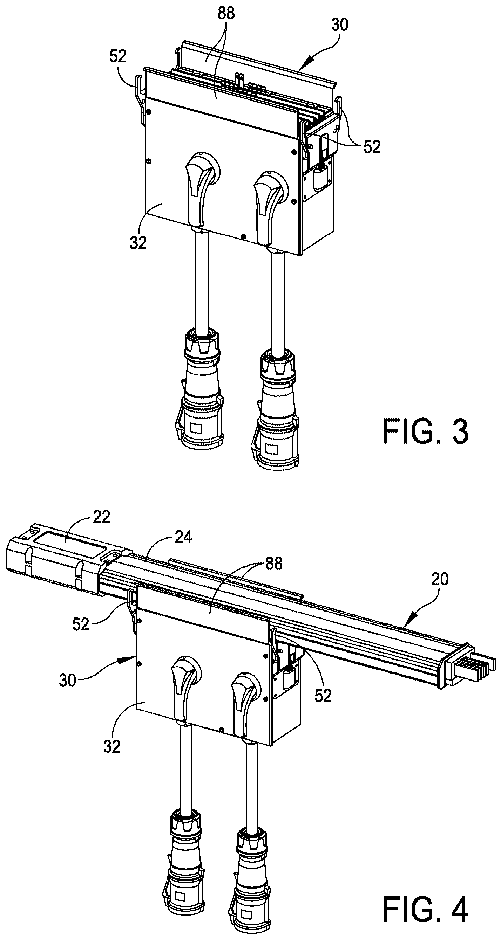

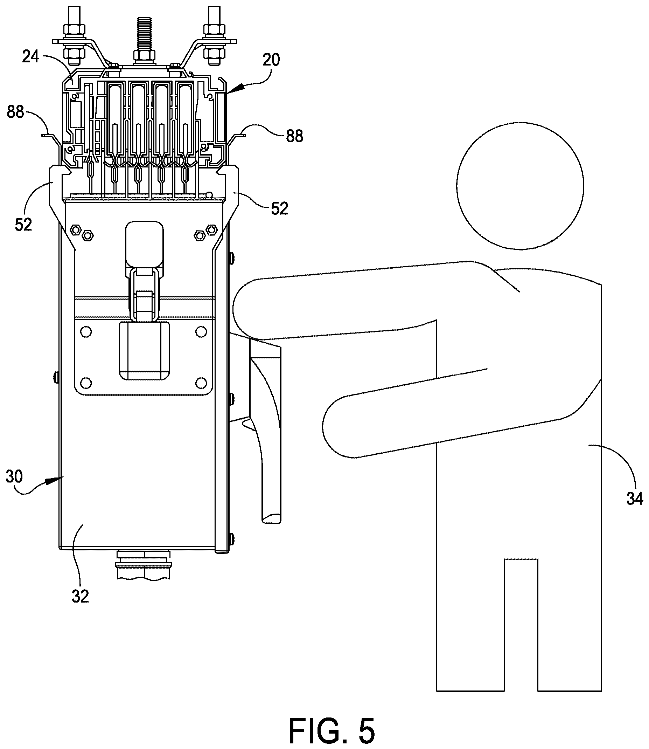

Referring to FIGS. 4 and 5, a plug-in unit, generally indicated at 30, is configured to be releasably secured and electrically connected to the busway track 20 of the busway track system 10. The arrangement is such that the busway track 20 provides power to the plug-in unit 30 when mechanically and electrically coupling the plug-in unit 30 to the busway track 20. In one embodiment, the plug-in unit 30 is configured to be secured (mechanically and electrically) to the busway track 20 without the use of tools and without having to power down the busway track system 10. The plug-in unit 30 includes a housing 32 that supports the components of the plug-in unit 30, including but not limited to a circuit breaker or fusible disconnect assembly. As shown, the housing 32 of the plug-in unit 30 includes a top, a bottom, two sides and two ends. The housing 32 of the plug-in unit 30 can be fabricated from sheet metal or some other suitable alloy or material that is capable of supporting the components of the plug-in unit 30. As will be discussed in greater detail below, the design of the plug-in unit 30 enables operators of data centers to install, remove and replace the plug-in unit 30 without having to power down the busway track system 10, with the plug-in unit 30 being connected to the busway track 20 and designed to mitigate the effects of arc flash during these events. FIG. 5 illustrates an operator 34 installing the plug-in unit 30 on the busway track 30.

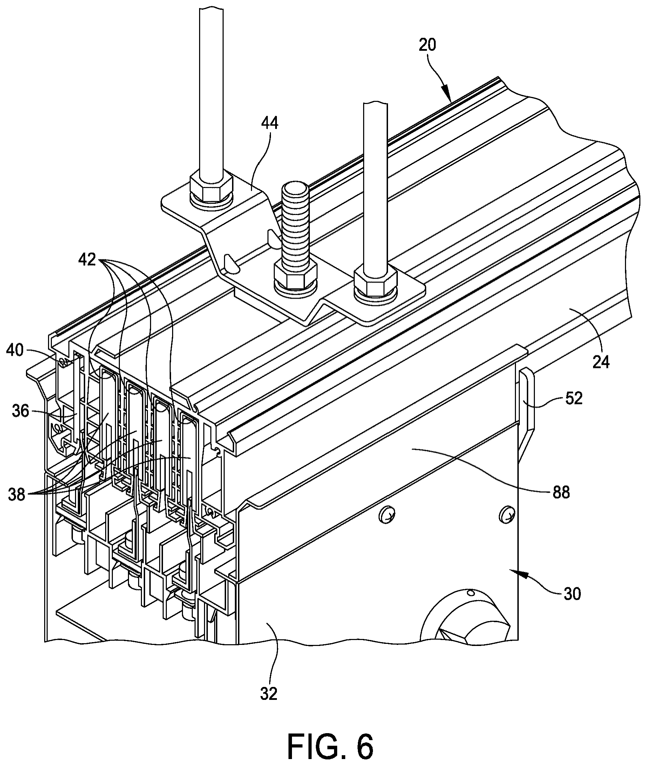

Referring additionally to FIG. 6, in one embodiment, the busway track 20 includes the support 24, which is configured to support five busbars, a ground busbar indicated at 36 and four live busbars each indicated at 38. The support 24 of the busway track 20 includes five receptacles 40, 42 in the form of slots that are configured to receive the ground busbar 36 (receptacle 40) and the four live busbars 38 (receptacles 42). The busbars 36, 38 are each configured to extend longitudinally along a length of the support 24 of the busway track 20, and may be in the form of a metallic bar, typically made of copper or aluminum, which is used in electrical systems to distribute power by connecting multiple components within the busway track system 10, facilitating electrical distribution of power. A bottom of the busway track 20 is open to expose the busbars 36, 38 and to enable electrical connectors of the plug-in unit 30 to engage the busbars 36, 38. As indicated, the plug-in unit 30 is capable of being secured mechanically and electrically to the busway track 20 along a length of the busway track 20. The support 24 of the busway track 20 is supported in an elevated position by a hanger assembly 44, which is suitably secured to the support 24 of the busway track 20.

Although busbars 36, 38 are disclosed herein, the busbars can be replaced by any suitable conductor of electricity. Accordingly, as used herein, the busbars 36, 38 may be referred to as conductors.

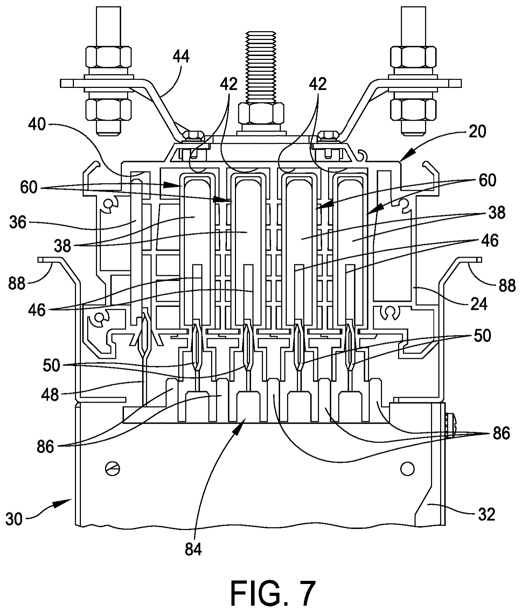

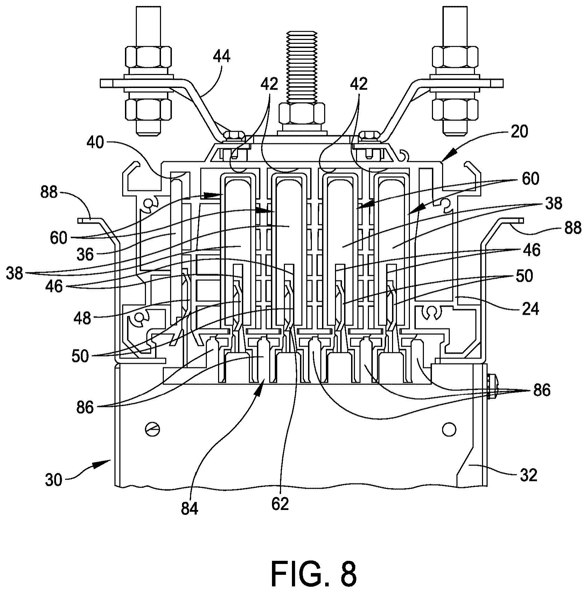

Referring to FIGS. 7 and 8, and more particularly to FIG. 7, the busway track 20 includes the ground busbar 36, which is a flat bar that extends along a length of the busway track 20. Similarly, the busway track 20 further includes the four live busbars 38, with each live busbar 38 including an elongated slot 46 formed therein that extends along a length of the live busbar 38. In the shown orientation, the slots 46 face downwardly with respect to the busway track 20 on the open bottom of the busway track 20. The purpose of the slots 46 will become apparent as the description of the busway track system 10 and the plug-in unit 30 proceeds.

The plug-in unit 30 includes several fingers, each of which extends upwardly with respect to the housing 32 of the plug-in unit 30. Specifically, the plug-in unit 30 includes a ground finger 48, which is positioned to engage the ground busbar 36 of the busway track 20, and four live fingers, each indicated at 50, which are positioned to be received with respective slots 46 of the live busbars 38. As shown, the ground finger 48 is positioned below the ground busbar 36 to a side of the ground busbar 36. Each live finger 50 is positioned directly below the slot 46 of its respective live busbar 38. The fingers 48, 50 of the plug-in unit 30 are sometimes referred to as pins and together create an electrical coupling assembly, which is designed to electrically couple the plug-in unit 30 to the busway track 20 of the busway track system 10. In one embodiment, each finger 36, 38 includes a base portion that is secured to the housing 32 of the plug-in unit 30 and a spring tip portion that extends from the base portion. As shown, the base portion of the ground finger 36 is slightly longer than the base portions of the live fingers 38.

The fingers 48, 50 can be part of a spring-loaded assembly provided on a frame of jaws coupled to the housing 32 of the plug-in unit 30. In a relaxed position, the spring-loaded assembly is biased away from the housing 32 of the plug-in unit 30. When coupled, the spring-loaded assembly is compressed thereby ensuring that the fingers 48, 50 are seated within the receptacles 40, 42 of the busbars 36, 38, respectively.

FIG. 7 illustrates the plug-in unit 30 in a position prior to connecting the plug-in unit 30 to the busway track 20 with the fingers 48, 50 spaced from their respective busbars 36, 38. This position may sometimes be referred to as an uncoupled position. FIG. 8 illustrates the plug-in unit 30 connected to the busway track 20 with the spring tip portion of the ground finger 48 engaging the ground busbar 36 and the spring tip portions of the live fingers 50 being received within the slots 46 of their respective busbars 38. In this position, the plug-in unit 30 is electrically connected to the busway track 20. This position may sometimes be referred to as a coupled position.

Referring back to FIGS. 3 and 4, the plug-in unit 30 further includes latches, each indicated at 52, to mechanically secure the housing 32 of the plug-in unit 30 to the support 24 of the busway track 20. The latches 52, which may be referred to as a mechanical coupling assembly, are configured to releasably secure the housing 32 of the plug-in unit 30 to the busway track 20, with the fingers 50 being fully inserted into the slots 46 of their respective busbars 38. It should be noted that any suitable structure and method may be provided to releasably secure the plug-in unit 30 to the busway track 20.

Although electrically coupling the plug-in unit 30 to the busway track 20 includes inserting the fingers 50 of the plug-in unit 30 into the slots 46 of the busbars 38 of the busway track 20, electrically coupling may include any manner in which the fingers engage or otherwise transmit power from the busbars 38. For example, similar to the engagement of the ground finger 48 to the ground busbar 36, the live fingers 50 may be positioned adjacent the live busbars 38 and configured to positively engage the live busbars 38 when electrically coupling the plug-in unit 30 to the busway track 20.

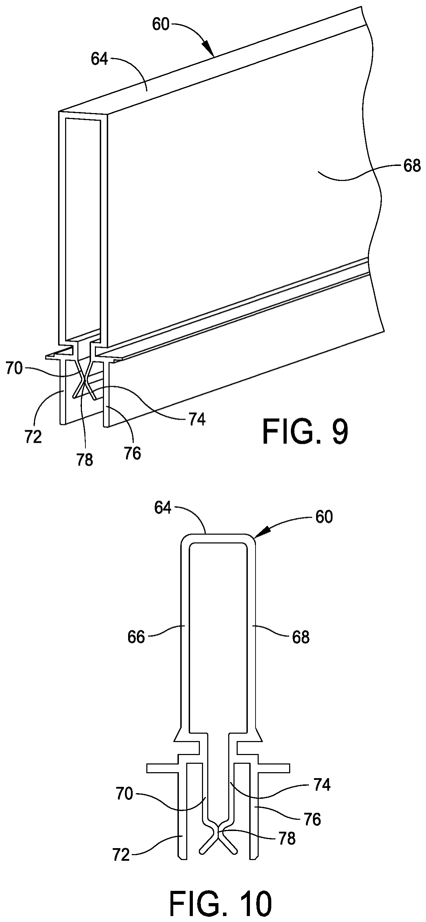

Referring additionally to FIGS. 9 and 10, aspects of the present disclosure are directed to a connection assembly that is used when connecting the plug-in unit 30 to the busway track 20. For each live busbar 38, the busway track 20 further includes a protective sleeve, generally indicated at 60, which is suitably secured to the support 24 of the busway track 20. As shown, each sleeve 60 is positioned within its respective receptacle 42 of the busway track 20. The sleeves 60 can be fabricated from any suitable insulative material. For example, the sleeves 60 can be fabricated from a polymeric material, including thermoplastic materials, e.g., polycarbonate.

The sleeves 60 are configured to surround portions of their respective busbars 38 and to extend beyond ends of their respective busbars 38. When the spring tip portions of the fingers 50 are fully inserted into the slots 46 of their respective busbars 38, each sleeve 60 extends beyond an interface at 62 (FIG. 8), which is defined by the top of the base portion of the finger 50 and the bottom edge of the busbar 38. Stated another way, the sleeve 60 extends below the lowermost connection point of the spring tip portion of the finger 50 and the busbar 38.

Referring specifically to FIGS. 9 and 10, each sleeve 60 includes a top wall portion 64, a first upper side wall portion 66, and a second upper side wall portion 68. The top wall portion 64 of each sleeve 60 is configured to cover a portion of a top of its respective busbar 38, the first upper side wall portion 66 of each sleeve 60 is configured to cover a portion of a first side of its respective busbar 38, and the second upper side wall portion 68 of each sleeve 60 is configured to cover a portion of a second side of the busbar 38. Each sleeve 60 further includes a first lower inner side wall portion 70, a first lower outer side wall portion 72 that is coupled to the first lower inner side wall portion 70, a second lower inner side wall portion 74, and a second lower outer side wall portion 76 that is coupled to the second lower inner side wall portion 74. As shown, the first lower inner side wall portion 70 and the first lower outer side wall portion 72 extend beyond the interface 62. Similarly, the second lower inner side wall portion 74 and the second lower outside side wall portion 76 extend beyond the interface 62 as well.

As used herein, the first upper side wall portion 66, the first lower inner side wall portion 70 and the first lower outer side wall portion 72 may together be referred to as the first side wall portion. Similarly, the second upper side wall portion 68, the second lower inner side wall portion 74 and the second lower outer side wall portion 76 may together be referred to as the second side wall portion. The components constituting the first side wall portion may be formed as a single piece or may be comprised of multiple pieces. Similarly, the components constituting the second side wall portion may be formed as a single piece or may be comprised of multiple pieces.

In the event of an arc flash event, an arc of an arc flash has to travel the distance defined by the first and second upper side wall portions 66, 68 and the first and second lower inner side wall portions 70, 74, which dissipates the arc because of the extended travel through the first and second lower inner side wall portions 70, 74. In the shown embodiment, the first and second lower inner side wall portions 70, 74 of each sleeve 60 includes a reduced width portion indicated at 78 located near the distal ends of the first and second lower inner side wall portions 70, 74. As shown, for each sleeve 60, the reduced width portion 78 is located beyond the bottom edge of its respective busbar 38 that defines the interface 62. In one embodiment, the reduced width portion 78 of each sleeve 60 creates a pinch point in which the first lower inner side wall portion 70 engages the second lower inner side wall portion 74. The pinch point is provided to terminate the arc of an arc flash. In one embodiment, the first and second lower inner side wall portions 70, 74 of the sleeve 60 are configured to flex to create the pinch point. Specifically, the lower inner side wall portions 70, 74 may be fabricated from flexible material to enable the lower inner side wall portions 70, 74 to spread apart when receiving the finger 50 when electrically coupling the plug-in unit 30 to the busway track 20.

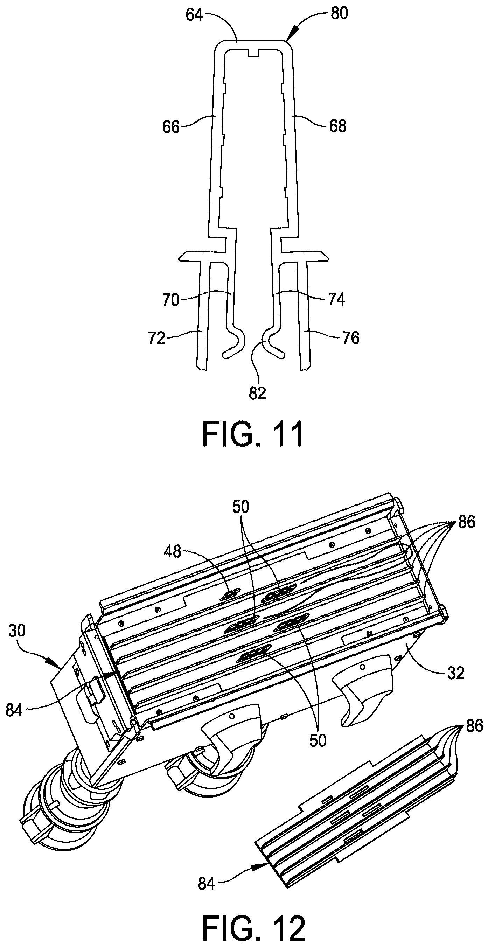

Referring to FIG. 11, a sleeve of another embodiment is generally indicated at 80. The sleeve 80 is similar to sleeve 60, with identical or nearly identical components of the sleeve 80 being represented by the same reference numbers. The primary difference is that the first and second lower inner side wall portions 70, 74 do not touch one another at a reduced width portion 82. Thus, the reduced width portion 82 of the sleeve 80 creates a modified pinch point in which the first lower inner side wall portion 70 is spaced from the second lower inner side wall portion 74 but is still capable of terminating the arc of an arc flash. In one embodiment, first and second lower inner side wall portions 70, 74 of the sleeve 80 are configured to flex to create the pinch point. Specifically, the lower inner side wall portions 70, 74 may be fabricated from flexible material to enable the lower inner side wall portions 70, 74 to spread apart when receiving the finger 50 when electrically coupling the plug-in unit 30 to the busway track 20.

Still referring to FIGS. 7 and 8, and additionally to FIG. 12, the housing 32 of the plug-in unit 30 further includes a barrier structure, generally indicated at 84, which is coupled to the housing 32 and configured to enable the live fingers 50 to extend therethrough. FIG. 12 illustrates a top down perspective view of the plug-in unit 30 with another barrier structure 84 positioned beside the plug-in unit 30 for clarity. As shown, the barrier structure 84 includes five barriers, each indicated at 86, that extend upwardly from the housing 32 of the plug-in unit 30. In one embodiment, for each finger 50, the barrier structure 84 includes one barrier 86, sometimes referred to as a first barrier, extending from the housing 32 on one side of the finger 50 and another barrier 86, sometimes referred to as a second barrier, extending from the housing 32 on an opposite side of the finger 50. As noted, there are five barriers 86 provided on the top of the housing 32 of the plug-in unit 30 so that each finger 50 includes a first barrier and a second barrier. Each barrier 86 may be made of an electrical insulator to protect the components of the plug-in unit 30 during an arc flash event. The barrier structure 84 can be fabricated from any suitable insulative material. For example, the barrier structure can be fabricated from a polymeric material, including thermoplastic materials, e.g., polycarbonate.

The barrier structure 84 is configured to interact with and engage the sleeves 60. Specifically, for each sleeve 60, the first lower outer side wall portion 72 and the second lower outer side wall portion 76 are configured to be positioned inboard with respect to barriers 86 so that the first and second outer side wall portions 72, 76 are positioned on the sides of the respective barriers 86. The provision of the first and second lower outer side wall portions 72, 76 of the sleeve 60 inhibits the travel of the arc of the arc flash from traveling from one busbar 38 and finger 50 to an adjacent busbar 38 and finger 50.

The housing 32 of the plug-in unit 30 further includes two insulated flanges, each indicated at 88, that extend upwardly from sides of the housing 32. The insulated flanges 88 may comprise sheet metal having an insulating layer therein, which can reduce the ability for an arc from an arc flash to strike the sheet metal. An interruption caused by an arc flash can be less severe when the arc does not strike the sheet metal. The insulated flanges 88 are first to engage the busway track 20 prior to the engagement of the finger 48 and the fingers 50. When in the coupled position, the flanges 88 extend over a portion of the busway track 20. As best shown in FIGS. 3-5, the flanges 88 are positioned on opposite sides of the housing 32 to protect the operator 34 when installing the plug-in unit 30 on the busway track 20. The construction of the sleeves 60 and the barrier structure 84 channels an arc of an arc flash along a length of the busway track 20, and the flanges 88 direct the arc of the arc flash that escapes on the sides of the interface of the busway track 20 and the housing 32 of the plug-in unit 30 away from the operator 34.

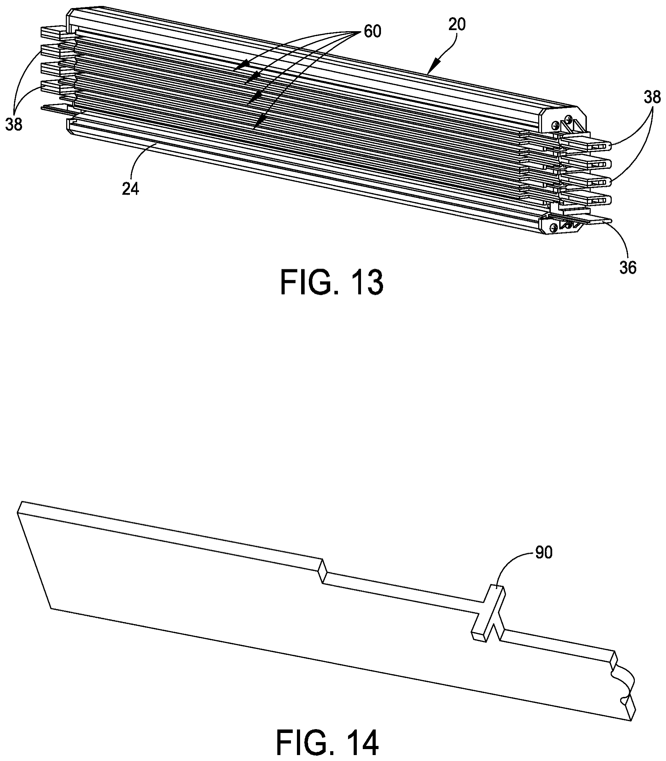

Referring to FIGS. 13 and 14, the busway track 20 further includes an arc stopper element 90 provided at an end of the busway track 20. As described above, an arc of an arc flash travels along a length of the busway track 20, with the busway tracks 20 being connected to one another by the connector 22. The arc stopper element 90 is provided at an end of the busway track 20 to inhibit any further travel of the arc of the arc flash beyond an end of the busway track 20. As shown in FIG. 13, the arc stopper element 90 extends perpendicularly with respect to a length of the barrier track 20 and fills a gap created by the connection of the connector 22 and the busway track 20.

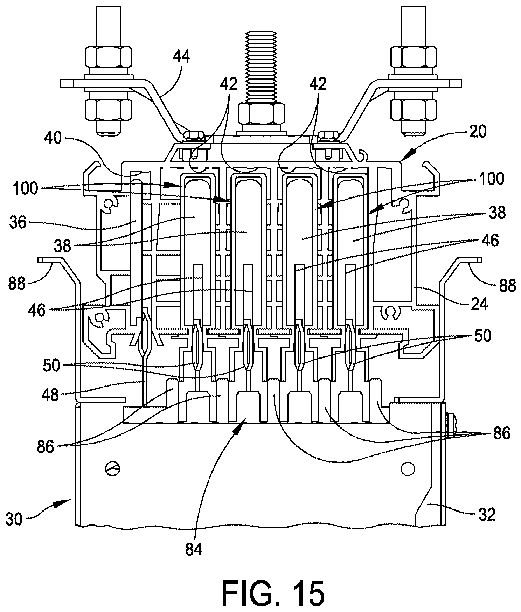

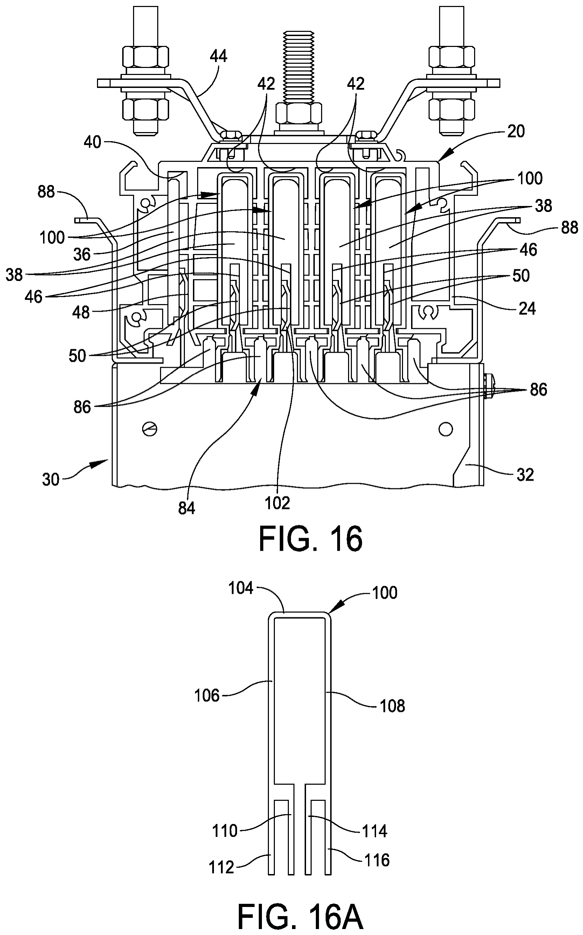

Referring to FIGS. 15 and 16, a connection assembly of another embodiment is shown and described below. Except as set forth below with respect to the protective sleeve, the busway track 20 and the plug-in unit 30 embody the same structure as described above, with identical or nearly identical components of the busway track 20 and the plug-in unit 30 being represented by the same reference numbers. The busway track 20 includes the ground busbar 36 and the four live busbars 38. The plug-in unit 30 includes the ground finger 48 and the four live fingers 50. FIG. 15 illustrates the plug-in unit 30 in a position prior to connecting the plug-in unit 30 to the busway track 20 with the fingers 48, 50 spaced from their respective busbars 36, 38. FIG. 16 illustrates the plug-in unit 30 connected to the busway track 20 with the spring tip portion of the ground finger 48 engaging its respective ground busbar 36 and the spring tip portions of the live fingers 50 being received within the slots 46 of their respective live busbars 38 to electrically connect the plug-in unit 30 to the busway track 20. The latches 52 mechanically secure the housing 32 of the plug-in unit 30 to the support 24 of the busway track 20.

Referring additionally to FIG. 16A, for each live busbar 38, the busway track 20 further includes a protective sleeve, generally indicated at 100, which is suitably secured to the support 24 of the busway track 20. The sleeve 100 is substantially similar to sleeves 60, 80 except as noted below. As with sleeves 60, 80, each sleeve 100 is position within its respective receptacle 42 of the busway track 20. The sleeve 100 can be fabricated from any suitable insulation material. As best shown in FIG. 15, the sleeves 100 are configured to surround portions of their respective live busbars 38 and to extend beyond ends of their respective live busbars 38. The result, when the spring tip portions of the live busbars 38 are inserted into the slots 46 of their respective live busbars 38, each sleeve 100 extends beyond an interface at 102 (FIG. 16) defined by the live finger 50 and the live busbar 38.

Each sleeve 100 includes a top wall portion 104, a first upper side wall portion 106, and a second upper side wall portion 108. The top wall portion 104 of each sleeve 100 is configured to cover a portion of a top of the busbar 38, the first upper side wall portion 106 of each sleeve 100 is configured to cover a portion of a first side of the busbar 38, and the second upper side wall portion 108 each sleeve 100 is configured to cover a portion of a second side of the busbar 38. Each sleeve 100 further includes a first lower inner side wall portion 110, a first lower outer side wall portion 112 that is coupled to the first lower inner side wall portion 110, a second lower inner side wall portion 114, and a second lower outer side wall portion 116 that is coupled to the second lower inner side wall portion 114.

Notably, as with sleeves 60, 80, the lengths of the first and second lower inner side wall portions 110, 114 of each sleeve 100 extend a distance beyond the interface 102 to extend a length of travel of an arc of an arc flash in the event of an arc flash event. As shown, the first and second lower inner side wall portion 110, 114 of each sleeve 100 does not include a reduced width portion, with each lower inner side wall portion 110, 114 extending parallel to one another below the bottom edge of its respective busbar 38. The housing 32 of the plug-in unit 30 further includes the barrier structure 84, which is coupled to the housing 32 and positioned on sides of each live finger 50. For each finger 50, the barrier structure 84 includes one barrier 86, sometimes referred to as a first barrier, extending from the housing 32 on one side of the finger 50 and another barrier 86, sometimes referred to as a second barrier, extending from the housing 32 on an opposite side of the finger 50. As noted, there are five barriers 86 provided on the top of the housing 32 of the plug-in unit 30 so that each finger 50 includes a first barrier and a second barrier. Each barrier 86 of the barrier structure 84 may be made of an electrical insulator to protect the components of the plug-in unit 30 during an arc flash event. The lower outer side wall portions 112, 116 of the sleeves 100 are configured to be positioned inboard of their respective barriers 86 of the barrier structure 84.

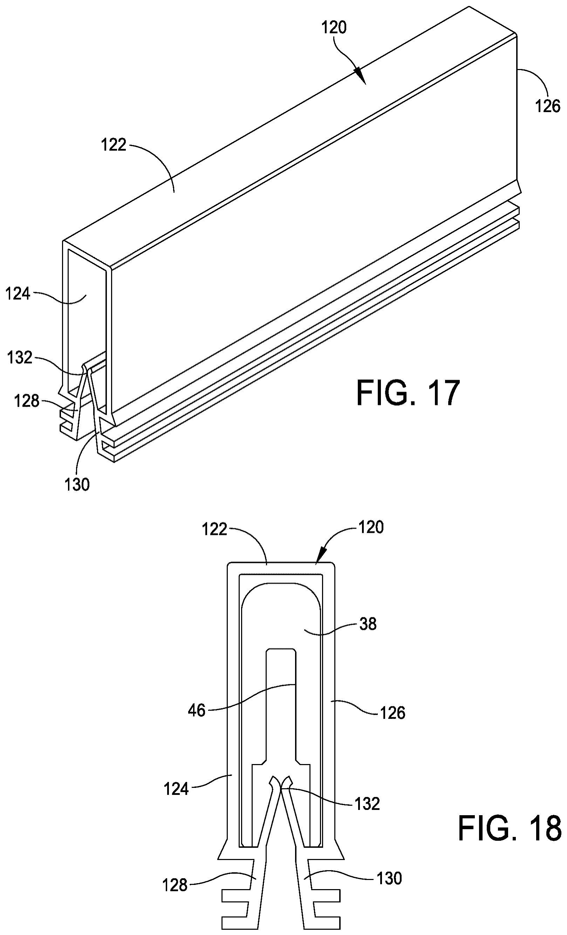

Referring to FIGS. 17 and 18, another embodiment of a sleeve is generally indicated at 120. The sleeve 120 is positioned within its respective receptacle 42 of the busway track 20. The sleeve 120 can be fabricated from any suitable insulative material. For example, as with sleeves 60, 80, 100, the sleeves 60 can be fabricated from a polymeric material, including thermoplastic materials, e.g., polycarbonate. The sleeve 100 is configured to surround portions of its respective busbar 38 and to extend beyond the end of its respective busbars 38. The sleeve 120 includes a top wall portion 122, a first upper side wall portion 124, and a second upper side wall portion 126. The top wall portion 122 of the sleeve 120 is configured to cover a portion of a top of its respective busbar 38, the first upper side wall portion 124 of the sleeve 120 is configured to cover a portion of a first side of its respective busbar 38, and the second upper side wall portion 126 of the sleeve 120 is configured to cover a portion of a second side of the busbar 38.

The sleeve 120 further includes a first lower inner side wall portion 128 and a second lower inner side wall portion 130. As shown, the sections of the first lower inner side wall portion 128 and the second lower inner side wall portion 130 extend between the first upper side wall portion 124 and the second upper side wall portion 126 and sections of the first lower inner side wall portion 124 and the second lower inside side wall portion 126 extend below the first upper side wall portion 124 and the second upper side wall portion 126. The sections of the first and second lower inner side wall portions 128, 130 that extend below the first upper side wall portion 124 and the second upper side wall portion 126 extend beyond the interface as well.

In the event of an arc flash event, an arc of an arc flash has to travel that distance, which dissipates the arc because of the extended travel through the first and second lower inner side wall portions 128, 130. The upper portions of the first and second lower inner side wall portions 128, 130 of the sleeve 120 includes a reduced width portion indicated at 132, which is positioned inside the first and second upper side wall portions 124, 126. The reduced width portion 132 of the sleeve 120 creates a pinch point in which the first lower inner side wall portion 128 engages the second lower inner side wall portion 130. The pinch point is provided to terminate the arc of an arc flash. In one embodiment, the first and second lower inner side wall portions 128, 130 of the sleeve 120 are configured to flex to create the pinch point. Specifically, the lower inner side wall portions 128, 130 may be fabricated from flexible material to enable the lower inner side wall portions 128, 130 to spread apart when receiving the finger 50 when electrically coupling the plug-in unit 30 to the busway track 20.

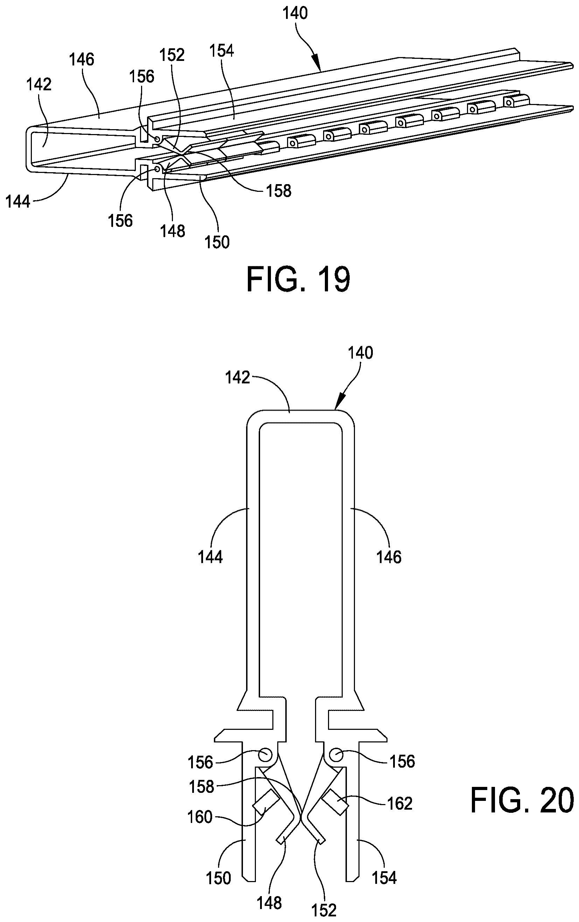

Referring to FIGS. 19 and 20, another embodiment of a sleeve is generally indicated at 140. The sleeve 140 includes a top wall portion 142, a first upper side wall portion 144, and a second upper side wall portion 146. The top wall portion of the sleeve 140 is configured to cover a portion of a top of its respective busbar 38, the first upper side wall portion 144 of the sleeve 140 is configured to cover a portion of a first side of its respective busbar 38, and the second upper side wall portion 146 of the sleeve 140 is configured to cover a portion of a second side of the busbar 38. The sleeve 140 further includes a first lower inner side wall portion 148, a first lower outer side wall portion 150 that is coupled to the first lower inner side wall portion 148, a second lower inner side wall portion 152, and a second lower outer side wall portion 154 that is coupled to the second lower inner side wall portion 152. As shown, the first lower inner side wall portion 148 and the first lower outer side wall portion 150 extend beyond the interface. Similarly, the second lower inner side wall portion 152 and the second lower outside side wall portion 154 extend beyond the interface as well. Further, each of the first and second lower inner side wall portions 148, 152 is hingedly connected, e.g., by a pin 156, to its respective first and second lower outer side wall portions 150, 154.

In the event of an arc flash event, an arc of an arc flash has to travel that distance, which dissipates the arc because of the extended travel through the first and second lower inner side wall portions 148, 152. The first and second lower inner side wall portions 148, 152 of the sleeve 140 includes a reduced width portion indicated at 158 located near the distal ends of the first and second lower inner side wall portions 148, 152. As shown, the reduced width portion 158 of the sleeve 140 is located beyond the bottom edge of its respective busbar 38 that defines the interface. In one embodiment, the reduced width portion 158 of the sleeve 140 creates a pinch point in which the first lower inner side wall portion 148 engages the second lower inner side wall portion 152. As shown in FIG. 20, the first lower inside wall portion 148 includes a first flexible member 160 and the second lower inside wall portion 152 includes a second flexible member 162. The flexible members 160, 162 are configured to provide resistance when the finger 50 is inserted into the slot 46 of the busbar 38. The flexible members 160, 162 can employ any type of device to provide resistance to the finger 50, including springs. The pinch point is provided to terminate the arc of an arc flash. The first and second lower inner side wall portions 148, 152 of the sleeve 140 are configured to rotate about their respective hinges to create the pinch point. In this embodiment, the sleeve 140 may be fabricated from a more rigid material since the lower inner side wall portions 148, 152 rotate about their respective hinges.

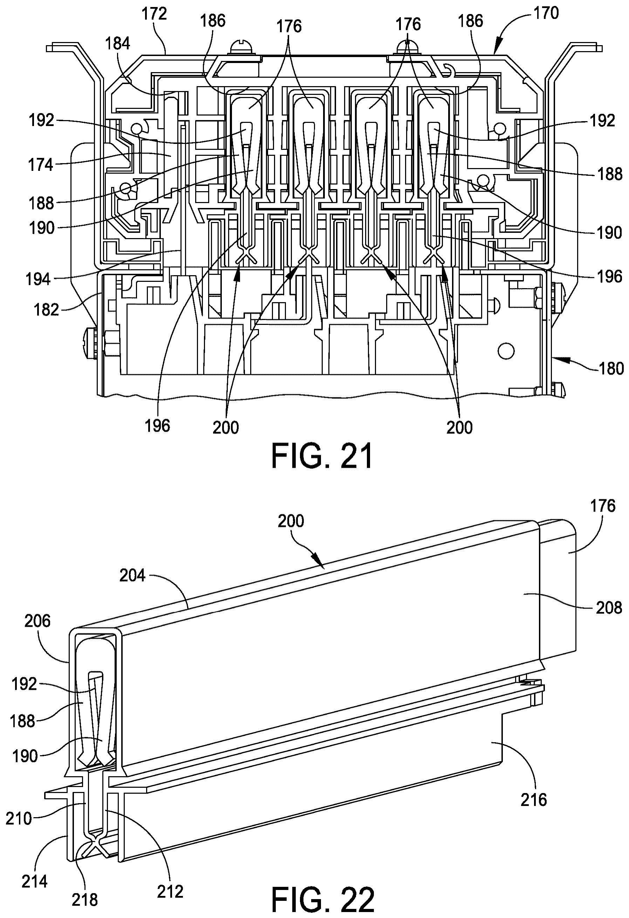

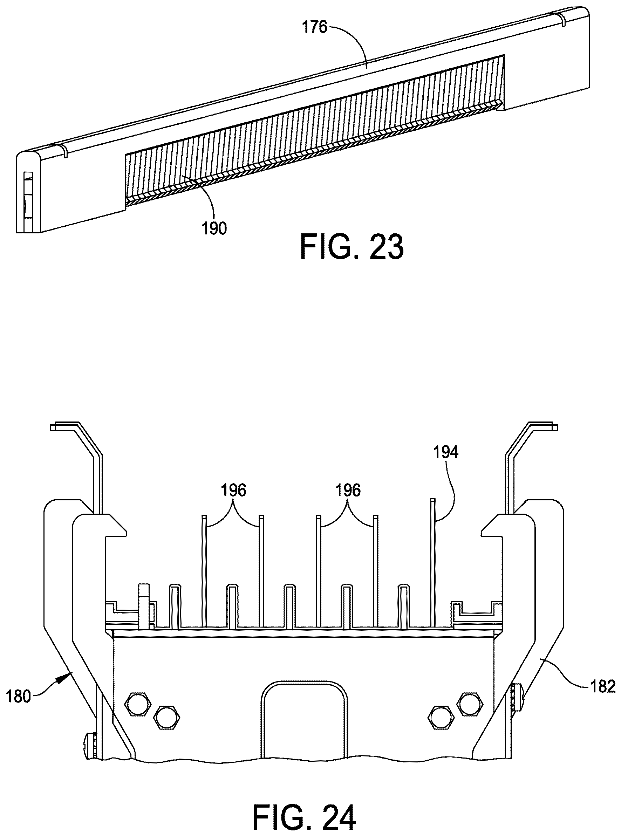

Referring to FIGS. 21-24, a busway track is generally indicated at 170. As with busway track 20, the busway track 170 includes a housing or support 172 which is configured to support multiple busbars. In one embodiment, the busway track 170 includes five busbars, one ground busbar and four live busbars configured to conduct current through the busway track 170. The busway track 170 may be configured to include any number of busbars to provide suitable power to the electrical equipment. A plug-in unit is generally indicated at 180. As with plug-in unit 30, the plug-in unit 180 is configured to be releasably secured and electrically connected to the busway track 170. The busway track 170 provides power to the plug-in unit 180 when mechanically and electrically coupling the plug-in unit 180 to the busway track 170. The plug-in unit 180 includes a housing 182 that supports the components of the plug-in unit 180.

The support 172 of the busway track 170 includes five busbars, a ground busbar indicated at 174 and four live busbars each indicated at 176. The support 172 of the busway track 170 includes five receptacles 184, 186 in the form of slots that are configured to receive the ground busbar (receptacle 184) and the four live busbars (receptacles 186). Each live busbar 176 includes two downwardly extending fingers 188, 190 to create a slot 192 formed between the fingers 188, 190 along the length of the live busbar 176. In the shown orientation, the slots 192 face downwardly with respect to the busway track 170 on the open bottom of the busway track 170.

The plug-in unit 180 includes several blades or stabs, each of which extends upwardly with respect to the housing 182 of the plug-in unit 180. Specifically, the plug-in unit 180 includes a ground stab 194, which is positioned to engage the ground busbar 174 of the busway track 170, and four live stabs, each indicated at 196, which are positioned to be received with respective slots 192 formed by the fingers 188, 190 of the live busbars 176. As shown, the ground stab 194 is positioned below the ground busbar 174 to a side of the ground busbar 174. Each live stab 196 is positioned directly below the slot 192 formed by the fingers 188, 190 of its respective live busbar 176.

FIG. 21 illustrates the plug-in unit 180 connected to the busway track 170 with the ground stab 194 engaging the ground busbar 174 and the live stabs 196 being received within the slots 192 formed by the fingers 188, 190 of their respective live busbars 176. In this position, the plug-in unit 180 is electrically connected to the busway track 170. Thus, the fingers 188, 190 can be associated with the busway track 170.

As shown in FIGS. 21 and 22, for each live busbar 176, the busway track 170 further includes a protective sleeve, generally indicated at 200, which is suitably secured to the support 172 of the busway track 170. As shown, each sleeve 200 is positioned within its respective receptacle 186 of the busway track 170. The sleeves 200 are configured to surround portions of their respective busbars 176 and to extend beyond ends of the fingers 188, 190 of their respective live busbars 176. When the stabs 196 of the plug-in unit 180 are fully inserted into the slots 192 of the fingers 188, 190 of their respective live busbars 176, each sleeve 200 extends beyond an interface at 202, which is located at the lower tips of the fingers 188, 190 of the live busbars 176.

As with sleeve 60, each sleeve 200 includes a top wall portion 204, a first upper side wall portion 206, and a second upper side wall portion 208. The top wall portion 204 of each sleeve 200 is configured to cover a portion of a top of its respective live busbar 176, the first upper side wall portion 206 of each sleeve 200 is configured to cover a portion of an outer surface of the first finger 188 of its respective live busbar 176, and the second upper side wall portion 208 of each sleeve 200 is configured to cover a portion of an outer surface of the second finger 190 of its respective live busbar 176. Each sleeve 200 further includes a first lower inner side wall portion 210, a first lower outer side wall portion 212 that is coupled to the first lower inner side wall portion 210, a second lower inner side wall portion 214, and a second lower outer side wall portion 216 that is coupled to the second lower inner side wall portion 214. The first lower inner side wall portion 210 and the first lower outer side wall portion 212 extend beyond the interface 202 and the second lower inner side wall portion 214 and the second lower outside side wall portion 216 extend beyond the interface 202.

In the event of an arc flash event, an arc of an arc flash has to travel the distance defined by the first and second upper side wall portions 206, 208 and the first and second lower inner side wall portions 210, 214, which dissipates the arc because of the extended travel through the first and second lower inner side wall portions 210, 214. In the shown embodiment, the first and second lower inner side wall portions 210, 214 of each sleeve 200 includes a reduced width portion indicated at 218 located near the distal ends of the first and second lower inner side wall portions 210, 214. As shown, for each sleeve 200, the reduced width portion 218 is located beyond the bottom ends of the fingers 188, 190 of its respective live busbar 176 that defines the interface 202. The reduced width portion 218 of each sleeve 200 creates a pinch point in which the first lower inner side wall portion 210 engages the second lower inner side wall portion 214. The pinch point is provided to terminate the arc of an arc flash.

Embodiments of the present disclosure are further directed to a method of connecting the plug-in unit 30 to the busway track 20. In one embodiment, for example the embodiment shown in FIGS. 7 and 8, the method includes positioning the housing 32 of the plug-in unit 30 on the busway track 20 and selectively electrically coupling the plug-in unit 30 to the busway track 20 by the electrical coupling assembly coupled to the housing 32 and configured to move between the uncoupled position in which the plug-in unit 30 is uncoupled to the busway track 20 and the coupled position in which the plug-in unit 30 is electrically coupled to the busway track 20. The method further includes, when the electrical coupling assembly is in the coupled position, engaging the live busbars 38 of the busway track 20 with the live fingers 50 of the plug-in unit 30, with the sleeves 60 of the busway track 20 extending beyond the interface of the live fingers 50 of the plug-in unit 30 and the live busbars 38. As noted above, the sleeves 60 surround portions of their respective busbars 38 and may be configured to extend beyond their busbars 38. In one embodiment, for each sleeve 60, the first lower inner side wall portion 70 and the second lower inner side wall portion 74 of the sleeve 60 include a reduced width portion 78 at distal ends of the first lower inner side wall portion 70 and the second lower inner side wall portion 74 beyond the end of the busbar 38. For each finger 50 of the plug-in unit, the barriers 86 of the barrier structure 84 are positioned adjacent to the finger 50 to direct or otherwise channel an arc flash along the length of the busway track 20. Specifically, for each finger 50, one barrier 86 extends from the housing 32 on one side of the finger 50 and another barrier 86 extends from the housing 32 on an opposite side of the finger 50. The flanges 88 are provided to protect the operator 34 when installing, removing or replacing the plug-in unit 30.

In some embodiments, the connection assembly enables the busway system 10 and the plug-in unit 30 to be capable of a live or hot swap procedure while minimizing risk to an operator of being exposed to an arc of an arc flash.

In some embodiments, an arc of an arc flash is forced to travel through the sleeve, and in one embodiment is pinched or otherwise trapped within the sleeve.

In some embodiments, the sleeves are configured to guide the live fingers into slots of respective live busbars.

In some embodiments, the barriers of the barrier structure channel arcs of arc flashes toward an end of the plug-in unit.

In some embodiments, the insulated flanges 88 of the plug-in unit reduce the arc energy from an arc flash to the operator, and reduce all modes of energy transfer, convection, conduction and radiation. The insulated flanges 88 redirect convective and conductive energy to the sides of the plug-in unit, away from the operator. The insulated flanges 88 act as a barrier, blocking the radiation from reaching the operator.

Further embodiments are described below.

Clause 1. A busway and plug-in unit connection assembly, comprising:
a busway including
   a support,
   at least one busbar coupled to the support, and
   at least one sleeve coupled to the support, the at least one sleeve surrounding portions of the at least one busbar; and
a plug-in unit including
   a housing configured to be secured to the busway, and
   an electrical coupling assembly coupled to the housing and configured to move between an uncoupled position in which the plug-in unit is uncoupled to the busway and a coupled position in which the plug-in unit is electrically coupled to the busway, the electrical coupling assembly having at least one finger configured to engage the at least one busbar when in the coupled position with the at least one sleeve extending beyond an interface of the at least one finger and the at least one busbar.

Clause 2. The connection assembly of clause 1, wherein the at least one sleeve includes a top wall portion, a first side wall portion, and a second side wall portion, the top wall portion being configured to cover a portion of a top of the at least one busbar, the first side wall portion being configured to cover a portion of a first side of the at least one busbar, and the second side wall portion being configured to cover a portion of a second side of the at least one busbar.

Clause 3. The connection assembly of clause 2, wherein the first side wall portion and the second side wall portion of the at least one sleeve extend beyond the at least one busbar and include a reduced width portion at distal ends of the first side wall portion and the second side wall portion beyond an edge of the at least one busbar.

Clause 4. The connection assembly of clause 3, wherein the reduced width portion creates a pinch point in which the first side wall portion engages the second side wall portion.

Clause 5. The connection assembly of clauses 2-4, wherein the electrical coupling assembly of the plug-in unit further includes at least one barrier structure coupled to the housing on sides of the at least one finger.

Clause 6. The connection assembly of clause 5, wherein the at least one barrier structure includes a first barrier extending from the housing on one side of the at least one finger and a second barrier extending from the housing on an opposite side of the at least one finger.

Clause 7. The connection assembly of clause 6, wherein the first barrier and the second barrier of the at least one barrier structure include an insulator.

Clause 8. The connection assembly of clauses 6 or 7, wherein the first side wall portion is configured to engage the first barrier and the second side wall portion is configured to engage the second barrier.

Clause 9. The connection assembly of clause 1, wherein the at least one busbar of the busway includes a first busbar and a second busbar each coupled to the support of the busway, and wherein the least one finger of the electrical coupling assembly of the plug-in unit includes a first finger and a second finger each coupled to the housing of the plug-in unit, and wherein the at least one sleeve includes a first sleeve surrounding portions of the first busbar and extending beyond the first busbar and a second sleeve surrounding portions of the second busbar and extending beyond the second busbar.

Clause 10. The connection assembly of clause 9, wherein each of the first sleeve and the second sleeve includes a top wall portion, a first side wall portion, and a second side wall portion, the top wall portion of the first sleeve being configured to cover a portion of a top of the first busbar, the first side wall portion of the first sleeve being configured to cover a portion of a first side of the first busbar, and the second side wall portion of the first sleeve being configured to cover a portion of a second side of the first busbar, and the top wall portion of the second sleeve being configured to cover a portion of a top of the second busbar, the first side wall portion of the second sleeve being configured to cover a portion of a first side of the second busbar, and the second side wall portion of the second sleeve being configured to cover a portion of a second side of the second busbar.

Clause 11. The connection assembly of clause 10, wherein the first side wall portion and the second side wall portion of each of the first sleeve and the second sleeve extend beyond the at least one busbar and include a reduced width portion at distal ends of the first side wall portion and the second side wall portion beyond an edge of its respective busbar.

Clause 12. The connection assembly of clauses 10 or 11, wherein the electrical coupling assembly of the plug-in unit further includes a first barrier structure coupled to the housing on sides of the first finger and a second barrier structure coupled to the housing on sides of the second finger.

Clause 13. The connection assembly of clause 12, wherein each of the first barrier structure and the second barrier structure includes a first barrier extending from the housing on one side of its respective finger and a second barrier extending from the housing on an opposite side of its respective finger.

Clause 14. The connection assembly of clauses 1-13, wherein the plug-in unit further includes at least one insulated flange on a side of the housing and extending over a portion of the busway.

Clause 15. The connection assembly of clauses 1-14, wherein the at least one sleeve includes an insulating material.

Clause 16. The connection assembly of clauses 1-15, wherein the busway further includes a stopper element on the busbar and configured to block movement of an arc of an arc flash.

Clause 17. A busway and plug-in unit connection assembly, comprising:
a busway including
   a support,
   at least one busbar coupled to the support, and
   at least one sleeve coupled to the support, the at least one sleeve surrounding portions of the at least one busbar; and
a plug-in unit including
   a housing configured to be secured to the busway, and
   an electrical coupling assembly coupled to the housing and configured to move between an uncoupled position in which the plug-in unit is uncoupled to the busway and a coupled position in which the plug-in unit is electrically coupled to the busway, the electrical coupling assembly having at least one finger configured to engage the at least one busbar when in the coupled position,
wherein the at least one sleeve includes a reduced width portion to create a pinch point.

Clause 18. A connection assembly, comprising:
at least one sleeve surrounding portions of at least one conductor,
wherein at least one finger of one of an electrical coupling assembly or the at least one conductor is configured to achieve a coupled position with the at least one sleeve extending beyond an interface of the at least one finger and the at least one conductor.

Clause 19. The connection assembly of clause 18, further comprising a stopper element configured to block movement of an arc of an arc flash.

Clause 20. The connection assembly of clauses 18 or 19, wherein the at least one sleeve includes a first side wall portion configured to cover a portion of a first side of the at least one conductor and a second side wall portion configured to cover a portion of a second side of the at least one conductor, the first side wall portion and the second side wall portion of the at least one sleeve extending beyond an edge of the at least one conductor.

Clause 21. The connection assembly of clause 20, further comprising at least one barrier structure on sides of the at least one finger.

Clause 22. The connection assembly of clause 21, wherein the at least one barrier structure includes a first barrier extending from the housing on one side of the at least one finger and a second barrier extending from the housing on an opposite side of the at least one finger.

Clause 23. A connection assembly, comprising:
at least one sleeve surrounding portions of at least one conductor,
wherein at least one finger of one of an electrical coupling assembly or the at least one conductor is configured to achieve a coupled position, and
wherein the at least one sleeve includes a reduced width portion to create a pinch point.

Clause 24. A connection assembly, comprising:
at least one sleeve surrounding portions of at least one conductor,
wherein at least one finger of one of an electrical coupling assembly or the at least one conductor is configured to achieve a coupled position; and
a stopper element configured to block movement of an arc of an arc flash.

Having thus described several aspects of at least one embodiment of this disclosure, it is to be appreciated various alterations, modifications, and improvements will readily occur to those skilled in the art. Such alterations, modifications, and improvements are intended to be part of this disclosure, and are intended to be within the scope of the disclosure. Accordingly, the foregoing description and drawings are by way of example only.

## Claims

1. A busway and plug-in unit connection assembly, comprising:
a busway (20) including
a support (24),
at least one busbar (36, 38) coupled to the support (24), and
at least one sleeve (60, 80) coupled to the support (24), the at least one sleeve (60, 80) surrounding portions of the at least one busbar (36, 38); and
a plug-in unit (30) including
a housing (32) configured to be secured to the busway (20), and
an electrical coupling assembly coupled to the housing (32) and configured to move between an uncoupled position in which the plug-in unit (30) is uncoupled to the busway (20) and a coupled position in which the plug-in unit (30) is electrically coupled to the busway (20), the electrical coupling assembly having at least one finger (48, 50) configured to engage the at least one busbar (36, 38) when in the coupled position with the at least one sleeve (60, 80) extending beyond an interface of the at least one finger (48, 50) and the at least one busbar (36, 38).

2. The connection assembly of claim 1, wherein the at least one sleeve (60, 80) includes a top wall portion, a first side wall portion, and a second side wall portion, the top wall portion being configured to cover a portion of a top of the at least one busbar (36, 38), the first side wall portion being configured to cover a portion of a first side of the at least one busbar (36, 38), and the second side wall portion being configured to cover a portion of a second side of the at least one busbar (36, 38).

3. The connection assembly of claim 2, wherein the first side wall portion and the second side wall portion of the at least one sleeve (60, 80) extend beyond the at least one busbar (36, 38) and include a reduced width portion at distal ends of the first side wall portion and the second side wall portion beyond an edge of the at least one busbar (36, 38), and optionally the reduced width portion creates a pinch point in which the first side wall portion engages the second side wall portion.

4. The connection assembly of claim 2 or claim 3, wherein the electrical coupling assembly of the plug-in unit (30) includes at least one barrier structure (84) coupled to the housing (32) on sides of the at least one finger (48, 50).

5. The connection assembly of claim 4, wherein the at least one barrier structure (84) includes a first barrier extending from the housing (32) on one side of the at least one finger (48, 50) and a second barrier extending from the housing (32) on an opposite side of the at least one finger (48, 50).

6. The connection assembly of claim 5, wherein the first barrier and the second barrier of the at least one barrier structure (84) include an insulator.

7. The connection assembly of claim 5 or claim 6, wherein the first side wall portion is configured to engage the first barrier and the second side wall portion is configured to engage the second barrier.

8. The connection assembly of claim 1, wherein the at least one busbar (36, 38) of the busway (20) includes a first busbar (36, 38) and a second busbar (36, 38) each coupled to the support (24) of the busway (20), and wherein the least one finger (48, 50) of the electrical coupling assembly of the plug-in unit (30) includes a first finger (48, 50) and a second finger (48, 50) each coupled to the housing (32) of the plug-in unit (30), and wherein the at least one sleeve (60, 80) includes a first sleeve (60, 80) surrounding portions of the first busbar (36, 38) and extending beyond the first busbar (36, 38) and a second sleeve (60, 80) surrounding portions of the second busbar (36, 38) and extending beyond the second busbar (36, 38).

9. The connection assembly of claim 8, wherein each of the first sleeve (60, 80) and the second sleeve (60, 80) includes a top wall portion, a first side wall portion, and a second side wall portion, the top wall portion of the first sleeve (60, 80) being configured to cover a portion of a top of the first busbar (36, 38), the first side wall portion of the first sleeve (60, 80) being configured to cover a portion of a first side of the first busbar (36, 38), and the second side wall portion of the first sleeve (60, 80) being configured to cover a portion of a second side of the first busbar (36, 38), and the top wall portion of the second sleeve (60, 80) being configured to cover a portion of a top of the second busbar (36, 38), the first side wall portion of the second sleeve (60, 80) being configured to cover a portion of a first side of the second busbar (36, 38), and the second side wall portion of the second sleeve (60, 80) being configured to cover a portion of a second side of the second busbar (36, 38).

10. The connection assembly of claim 9, wherein the first side wall portion and the second side wall portion of each of the first sleeve (60, 80) and the second sleeve (60, 80) extend beyond the at least one busbar (36, 38) and include a reduced width portion at distal ends of the first side wall portion and the second side wall portion beyond an edge of its respective busbar (36, 38).

11. The connection assembly of claim 9 or claim 10, wherein the electrical coupling assembly of the plug-in unit (30) includes a first barrier structure (84) coupled to the housing (32) on sides of the first finger (48, 50) and a second barrier structure (84) coupled to the housing (32) on sides of the second finger (48, 50).

12. The connection assembly of claim 11, wherein each of the first barrier structure (84) and the second barrier structure (84) includes a first barrier (86) extending from the housing (32) on one side of its respective finger (48, 50) and a second barrier (86) extending from the housing (32) on an opposite side of its respective finger (48, 50).

13. The connection assembly of any of claims 1 to 12, wherein at least one of:
the plug-in unit (30) includes at least one insulated flange (88) on a side of the housing (32) and extending over a portion of the busway (20);
the at least one sleeve (60, 80) includes an insulating material, or
the busway (20) includes a stopper element (90) on the busbar (36, 38) and configured to block movement of an arc of an arc flash.

14. A busway and plug-in unit connection assembly, comprising:
a busway (20) including
a support (24),
at least one busbar (36, 38) coupled to the support (24), and
at least one sleeve (60, 80) coupled to the support (24), the at least one sleeve (60, 80) surrounding portions of the at least one busbar (36, 38); and
a plug-in unit (30) including
a housing (32) configured to be secured to the busway (20), and
an electrical coupling assembly coupled to the housing (32) and configured to move between an uncoupled position in which the plug-in unit (30) is uncoupled to the busway (20) and a coupled position in which the plug-in unit (30) is electrically coupled to the busway (20), the electrical coupling assembly having at least one finger (48, 50) configured to engage the at least one busbar (36, 38) when in the coupled position,
wherein the at least one sleeve (60, 80) includes a reduced width portion to create a pinch point.

15. A connection assembly, comprising:
at least one sleeve (60, 80) surrounding portions of at least one conductor,
wherein at least one finger (48, 50) of one of an electrical coupling assembly or the at least one conductor is configured to achieve a coupled position with the at least one sleeve (60, 80) extending beyond an interface of the at least one finger (48, 50) and the at least one conductor.
